**Europäisches Patentamt**

(19) **European Patent Office**

**Office européen des brevets**

(11) Publication number: **0 107 377**
**B1**

(12) **EUROPEAN PATENT SPECIFICATION**

(45) Date of publication of patent specification: **05.06.85**

(51) Int. Cl.⁴: **F 23 C 11/02, B 01 J 8/00**

(21) Application number: **83305774.8**

(22) Date of filing: **27.09.83**

(54) **Fluidised bed combustion apparatus and method of operating the same.**

(30) Priority: **26.10.82 GB 8230529**

(43) Date of publication of application:
**02.05.84 Bulletin 84/18**

(45) Publication of the grant of the patent:
**05.06.85 Bulletin 85/23**

(84) Designated Contracting States:
**BE DE FR NL**

(56) References cited:
**EP-A-0 050 518**
**DE-A-2 356 061**
**GB-A- 804 365**
**GB-A-1 419 811**
**GB-A-2 011 050**
**US-A-4 226 830**
**US-A-4 343 247**

(73) Proprietor: **Coal Industry (Patents) Limited**
**Hobart House Grosvenor Place**
**London SW1X 7AE (GB)**

(72) Inventor: **Napier, Brian Anthony**
**26 Main Street Sedgeberrow**
**Evesham Worcestershire (GB)**
Inventor: **Cooke, Michael Jonathan**
**9 Westal Park**
**Cheltenham Gloucestershire (GB)**
Inventor: **Stayte, Michael Robert**
**Lynwood Seven Waters Leonard Stanley**
**Stonehouse Gloucestershire (GB)**

(74) Representative: **Wood, John Irwin**
**Hobart House Grosvenor Place**
**London SW1X 7AE (GB)**

Courier Press, Leamington Spa, England.

## Description

This invention concerns fluidised beds as defined in the pre-characterising part of claim 1 and as shown for example in GB—A—1 419 811, employed for treatment of particulate material, chemical reactions, catalysis, combustion or gasification, and a method of operating such beds.

The present invention has particular, although not exclusive reference to the use of fluidised beds for the combustion of material, for example coal. Although it is to be understood that fluidised bed combustion can be utilised for burning other combustible material, including waste materials.

It is considered that any expansion in the market for U.K. coal is likely to be realised in the industrial sector and accordingly great emphasis is now being placed upon the development and commercialisation of fluidised bed combustion systems which are believed to be the most suitable to meet this expected rise in demand for coal. Such systems are compact and flexible, but as they are developed for applications in increasingly larger boilers and power plants, there will result a concomitant pressure to utilise the cheaper and more plentiful grades of coal, for example, those of 15 to 25% ash blended smalls and possibly untreated coals.

The ash from these cheaper grades of coal will contain significant proportions of relatively hard shale particles, which cannot be readily eliminated from the fluidised combustion bed as can the relatively smaller and softer inherent ash in the coal. If the coal fed to the bed is of a large top size, shale and ash particles will tend to accumulate in the bed thereby causing segregation and fluidisation problems in conventionally designed fluidised bed combustors and boilers. Even partial defluidisation of the bed may adversely affect combustion efficiency and the thermal output of a boiler and, in severe cases, may lead to the formation of clinkers, unscheduled shut-downs and the consequent unavailability of the plant concerned.

One object of the present invention is to provide fluidised bed apparatus and a method of operating the same which will afford a means of effecting and facilitating the removal of large particles fed to or formed in a fluidised bed during combustion.

A further object of the present invention is to provide a means whereby the height of a fluidised bed can be controlled.

Accordingly one aspect of the invention provides fluidised bed apparatus including a body adapted to contain a fluidised bed in a region thereof, a distributor for fluidising medium comprising a plurality of spaced elements provided with outlets for the medium, the distributor being located within the body to define a reaction zone thereabove and a material removal zone therebelow, and a support member situated in the material removal zone and having a plurality of support regions registering with the spaces between the elements of the distributor and disposed in spaced relation thereto, at least parts of the support regions of the support member being movable with respect to the spaces between the elements of the distributor.

The body of the apparatus includes an inlet for a material to undergo reaction or treatment and an outlet for gases.

The elements of the distributor may conveniently include a plurality of sparge pipes provided with perforations, in which are fixed standpipes suitably drilled to provide outlets for the fluidising medium.

The elements of the distributor may have flat upper surfaces provided with perforations in which standpipes of the same height are fixed, outlets being provided in standpipes. Alternatively, the standpipes may be of varying height, the tallest being in the centre of the upper surfaces and graduating down towards the edges of the elements in order to afford a triangular configuration when viewed along the length of the elements. The variation in height is intended to provide, in use, an inducement for larger particles in the fluidised bed to move in the direction of the spaces between the elements.

As a further alternative, the elements of the distributor may have convex upper surfaces provided with perforations in which standpipes are fixed. The standpipes may be of equal height or may be of varying height as indicated above.

The support member may be in the form of a grating comprising a plurality of bars constituting the support regions. The bars may be flat plates each located beneath a space defined between adjacent elements of the distributor. The bars may be provided with ribs or fins extending obliquely across their upper surfaces. The grating may be movable as a unit or the individual bars thereof may be movable independently of each other. The bars of the grating may be moved laterally or longitudinally with respect to the spaces; as an alternative the bars may be raised or lowered with respect to the spaces. As a still further alternative, the bars of the grating may be tiltable about their axes.

The bars of the support member may, in another embodiment, be provided with hinged portions along their marginal edges, such portions being pivotal whereby in use upon movement of the portions away from the spaces, material overlying the bars is allowed to discharge therefrom.

The bars, in an alternative form, may be concave in section thereby forming troughs, the bars in use being tiltable about their axes.

The support member may be an apertured plate, the parts of the plate between the apertures registering with the spaces between the elements of the distributor. Upon movement of the plate, the apertures pass beneath the spaces, thereby in use to allow flow of material therethrough.

In an alternative embodiment, the spaces between adjacent elements are bridged by fixed apertured plates. The support member is in the form of an apertured plate or plates, the plate or plates being movable in relation to the fixed plates and thus to the spaces between adjacent elements of the distributor. In use, material may flow through the apertures in the fixed plate to rest on the plate or plates of the support member and upon the movement of the support member to bring the apertures in the fixed and moving plates into register, material flow therethrough can take place.

The support member is preferably disposed at a distance beneath the distributor equivalent to approximately five particle diameters of the largest particles likely to be encountered, thereby to prevent blockages.

The distance of the support member from the distributor will, however, depend upon the material in the fluidised bed intended to be removed therefrom. If the support members were to be placed too close to the distributor, the force would be greater than that required to move the member when located at the distance from the distributor as indicated above, since motion of a member in close proximity might cause shearing of the particles which, in use, pass onto the member through the spaces between elements of the distributor. In addition wear and blockages may be caused.

A device for removing particles from the base of the body may advantageously be provided, together with a lock hopper or equivalent into which the particles can be passed. The device may be movable linearly if the body of the apparatus is of rectangular or square form, but may be of a rotary character when the body is circular.

According to a second aspect of the invention there is provided a method of operating the fluidised bed apparatus according to the first aspect, the method including the steps of forming a bed of particulate material within the body of the apparatus, passing a fluidising medium through the elements of the distributor to issue into the bed to fluidise the particles thereof, causing a treatment or reaction to take place in the bed, allowing coarse particles present or formed as a result of the treatment or reaction to pass from the reaction zone through the spaces between the distributor elements into the material removal zone and to rest on the support regions of the support member, and moving at least parts of the support regions of the support member with respect to said spaces thereby to effect discharge of the coarse particles from the support regions into an area beneath the support member.

The reaction carried out in the method of the invention may be combustion and accordingly combustible material, for example coal, is fed to the fluidised bed to be burned therein. Ash is formed during combustion and coarse ash is allowed to pass through the spaces between the distributor elements to rest on the support regions of the support member which thus retains the fluidised bed within the reaction zone by virtue of the particles on the support member. When it is desired to discharge the coarse ash particles, the support member is moved to cause the flow of the particles from the support member. It will be appreciated that the degree and frequency of the movement of the support member will govern the rate of removal of material from the fluidised bed and thus will control the height thereof.

The method of the present invention, therefore, also includes the step of moving the support member to effect discharge of particles from the fluidised bed in order to control the height of the bed.

The method of the invention is not confined to the combustion process which may require the burning not only of solid fuel, but also or alternatively other combustible matter, for example waste products. The method may be used in gasification reactions or catalytic reactions, or treatments in which the particles to be removed from the fluidised bed constitute a useful product.

The method also includes the step of periodically removing particles which have accumulated on the base of the body of the apparatus.

By way of example only, a fluidised bed apparatus and method of operating the same in accordance with the present invention are described below with reference to the accompanying drawings in which:

Figure 1 is a diagrammatic plan view of the apparatus;

Figure 2 is a section on the line II—II of Figure 1;

Figure 3 is a section on the line III—III of Figure 1;

Figure 4 is a cross-sectional view of a second embodiment;

Figure 5 is a perspective view of a detail of a third embodiment;

Figure 6 is a plan view of the detail shown in Figure 5; and

Figure 7 is a side elevation corresponding to the view shown in Figure 6.

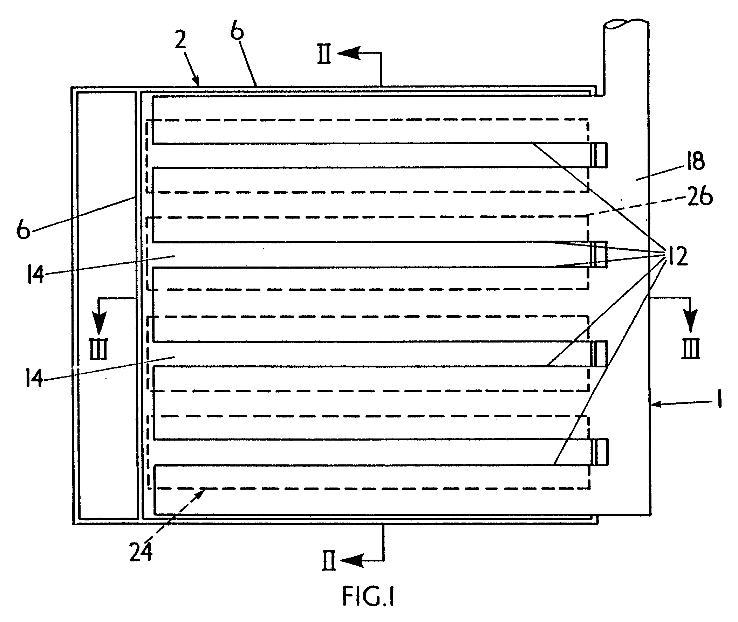

Referring to Figures 1 to 3 of the drawings, a fluidised bed apparatus is shown at 1 and comprises a body 2 having a base 4, walls 6, and a top 8 provided with gas outlet 10. An inlet (not shown) for fuel is also provided in the body 2. A distributor 11 consists of an array of sparge pipes 12 shown extending lengthwise of the body 2 in mutually parallel relationship, spaces 14 being defined between adjacent sparge pipes 12 which have upstanding therefrom perforated standpipes 16. An air supply pipe 18 positioned externally of the body 2 constitutes a manifold connecting the sparge pipes 12 which penetrate an end wall 6. A combustion zone 20 is defined above the distributor 11 and a material removal zone 22 is defined therebelow.

A grating 24 is situated in the material removal zone 22 and comprises a plurality of bars 26 each of which is disposed lengthwise of the body 2 to correspond with a space 14 and is of plate-like form. The grating 24 is disposed at such a distance beneath the distributor 11 to ensure that in use the suitable angle of repose for material to be deposited thereon can be achieved in at least one position of the grating 24. Additionally, in order to avoid difficulty in moving the grating 24 and to ensure ready movement of the ash particles, the distance is preferably approximately equal to five particle diameters of the material. A means (not shown) for moving the grating 24 is provided.

A scraper 30 is situated on the bottom 4 of the body 2 and is actuable, in use, to withdraw material which has accumulated there into a lock hopper 31.

In operation, a bed 32 of particulate material, e.g. sand, is established in the body 2 and is fluidised by air passing from the pipe 18 into the sparge pipes 12 and issuing through the perforated standpipes 16. The temperature of the bed 32 is raised by any suitable means, for example burners or preheated air, to a level at which combustion of coal can proceed. Coal is introduced into the bed 32 and is burned therein within the combustion zone 20.

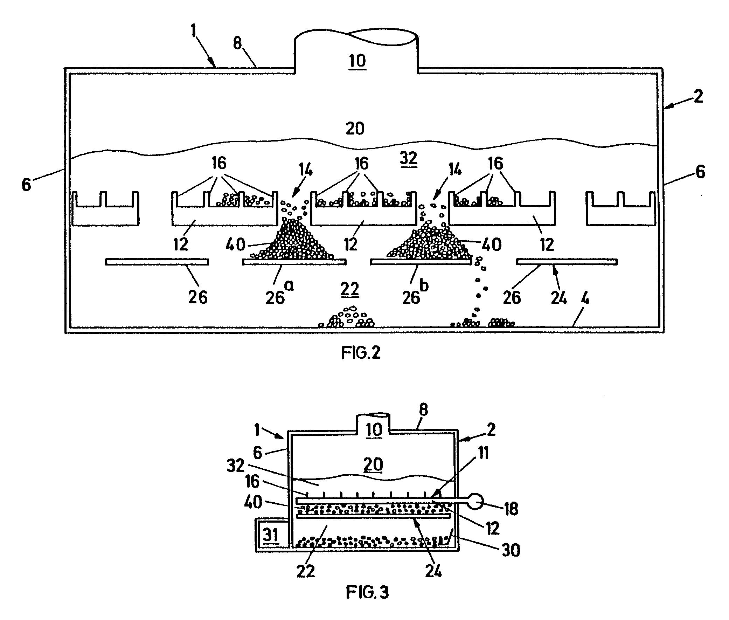

The coal contains ash, some of which is fine and some coarse. The fine ash particles produced as a result of combustion tend to be elutriated and carried out of the apparatus body 2 via outlet 10. The coarse ash particles gravitate to the base of the bed 32 and in the present invention flow through the spaces 14 into material removal zone 22 where they form piles on the bars 26 of the grating 24, the natural angle of repose for ash being about 45°. The coarse ash particles, designated 40, remain static (see 26a, Figure 2) until it becomes necessary to effect their discharge. The bars 26 of the grating 24 are moved (see 26b) laterally of the spaces 14 either in unison or separately thereby to upset the repose of the particles 40 which thus fall onto the base 4 of the body 2. The movement of the grating bars 26 is initiated intermittently as and when required to control the height of the fluidised bed and to remove the particles 40 which have accumulated thereon.

When a sufficient amount of particles 40 has been deposited on the base 4, the scraper 30 is actuated to withdraw them into the lock hopper 31 for subsequent removal and disposal.

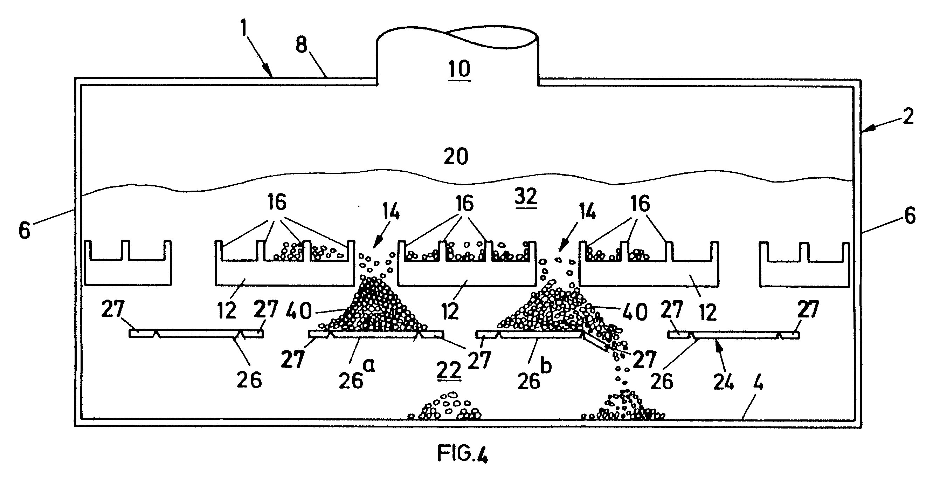

Referring now to Figure 4, like parts have been accorded the same reference numerals as those employed for Figure 1 to 3. In this second embodiment, the bars 26 are provided along their marginal longitudinal edges with hinged portions 27 which are capable of downward pivotal movement, that is away from the spaces 14. The bars at 26 and 26a are shown in a fully horizontal mode and the bar 26a supports the material overlying it. The bar 26b also supports some material on its upper surface, but one of the hinged portions 27 has been moved pivotally downwards thus allowing material to flow off the bar into the material removal zone 22. The hinged portions 27 of the bars 26 may be moved individually or in unison depending upon requirements.

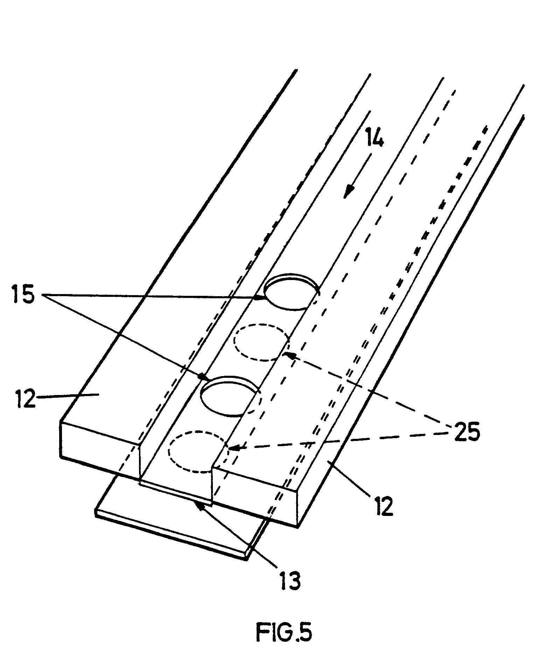

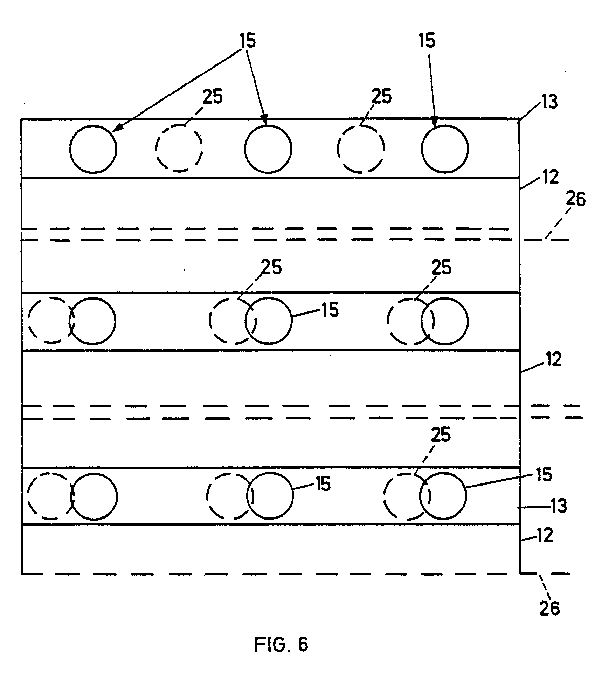

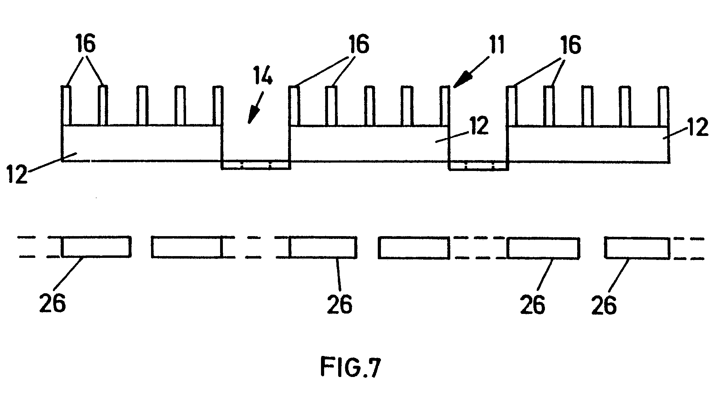

With reference to Figure 5, 6 and 7 again like numerals of reference have been used for the same parts as those illustrated in the preceding figures. The third embodiment includes a distributor 11 having sparge pipes 12 provided with spaces 14 therebetween. Fixed plates 13 bridge the spaces 14 at the lower margins of the pipes 12 and have apertures 15 arranged longitudinally of the plates 13. The support member 24 comprises a plurality of bars 26 greater in width than the plates 13 and thus spaces 14 and apertures 25 are provided in the bars 26 longitudinally spaced apart therealong. In use, bed material may flow between the space 14 and through the apertures 15 onto the bars 26. When it is desired to effect discharge of material, the bars 26 are moved longitudinally to bring the apertures 25 into register with apertures 15 thereby allowing flow of the material from the bed into the material removal zone.

The present invention facilitates the removal of coarse ash particles from the base of the fluidised bed the operation of which would otherwise be impeded by their presence. The rate of removal is controlled by means of the movement of the support member which, if positioned as indicated, requires little power to operate. By providing this novel method of controlled removal of coarse ash particles from the full area of the fluidised bed, fuel of a larger size than has hitherto been employed can be used, possibly without preparation in terms of crushing or washing. In addition, the invention enables control of the fluidised bed height to be achieved since the particles resting on the support member effectively keep the fluidised bed in the reaction zone. Thus by moving the support member to allow discharge of particles, the height of the bed can be changed.

**Claims**

1. A fluidised bed apparatus includes a body (2) adapted to contain a fluidised bed in a region thereof, a distributor (11) for a fluidising medium comprising a plurality of spaced elements (12) provided with outlets for the medium, the distributor being located within the body to define a reaction zone (20) thereabove and a material removal zone (22) therebelow characterised by a support member (24) situated in the material removal zone (22) and having a plurality of support regions (26) registering with the spaces (14) between the elements (12) of the distributor (11) and disposed in spaced relation thereto, at least parts of the support regions (26) of the support members (24) being movable with respect to the spaces (14) between the elements (12) of the distributor (11).

2. An apparatus according to claim 1, characterised in that the elements (12) of the distributor (11) are sparge pipes.

3. An apparatus according to claim 2, characterised in that the sparge pipes (12) are provided with perforated standpipes (16) arranged in rows.

4. An apparatus according to claim 2 and 3, characterised in that the sparge pipes (12) have flat upper surfaces and the standpipes (16) are of equal height.

5. An apparatus according to claims 2 and 3 characterised in that the sparge pipes (12) have flat upper surfaces and the standpipes (16) are graduated in height.

6. An apparatus according to claim 5, characterised in that the standpipes (16) are situated along the centre of each sparge pipe (12) are higher than those situated towards the longitudinal marginal edges thereof.

7. An apparatus according to claims 2 and 3, characterised in that the sparge pipes have convex upper surfaces.

8. An apparatus according to claim 7, characterised in that the standpipes (16) are of equal height.

9. An apparatus according to claim 7, characterised in that the standpipes (16) are graduated in height.

10. An apparatus according to claim 9, characterised in that the standpipes (16) situated along the centre of each sparge pipe (12) are higher than those situated towards the longitudinal edges thereof.

11. An apparatus according to any one of the preceding claims, characterised in that the support member (24) is a grating comprised of a plurality of bars (26) constituting the support regions.

12. An apparatus according to any one of the preceding claims characterised in that the support regions (26) of the support member (24) are movable laterally with respect to the spaces (14) between the elements (12) of the distributor (11).

13. An apparatus according to any one of the preceding claims characterised in that the support regions (26) of the support member (24) include portions (27) movable pivotally with respect to the spaces (14) between the elements (12) of the distributor (11).

14. An apparatus according to claims 1 to 10, characterised in that the spaces (14) between the elements (12) of the distributor (11) are bridged by fixed apertured plates (13, 15) secured to the lower margins of the elements (12), and the support regions (26) of the support member (24) are apertured (25).

15. An apparatus according to any one of the preceding claims 1 to 11, characterised in that the support regions (26) of the support member (24) are movable vertically with respect to the spaces (14) between the elements (12) of the distributor (11).

16. An apparatus according to any one of the preceding claims 1 to 11, characterised in that the support regions (26) of the support member (24) are movable longitudinally with respect to the spaces (14) between the elements (12) of the distributor (11).

17. An apparatus according to any one of the preceding claims 1 to 11, characterised in that the support regions (26) of the support member (24) are tiltable about their axes.

18. An apparatus according to any one of the preceding claims, characterised in that the support regions (26) of the support member (24) are movable in unison.

19. An apparatus according to any one of the preceding claims 1 to 17, characterised in that the support regions (26) of the support member (24) are movable independently of each other.

20. An apparatus according to any one of the preceding claims, characterised in that the support member (24) is disposed at a distance beneath the distributor (11) such as to allow movement of the support member (24) in use.

21. An apparatus according to claim 18, characterised in that the support member (24) is disposed at a distance beneath the distributor (11) equivalent to approximately five particle diameters of the largest particle which is to be encountered in use.

22. An apparatus according to any one of the preceding claims, characterised in that a device for removing particles from the base (4) of the body (2) is provided in the material removal zone (22) beneath the support member (24).

23. An apparatus according to claim 20, characterised in that a lock hopper is provided to receive particles removed from the base (4) of the body (2) by the device.

24. An apparatus according to any one of the preceding claims, characterised in that the reaction zone is a combustion zone.

25. An apparatus according to any one of the preceding claims, characterised in that the reaction zone is a gasification zone.

26. A method of operating the fluidised bed apparatus as claimed in the preceding claims, the method including the steps of forming a bed of particulate material within the body of the apparatus, passing a fluidising medium through the elements of the distributor (11) to issue into the bed to fluidise the particles thereof, causing a treatment or reaction to take place in the bed, characterised by allowing coarse particles present or formed as a result of the treatment or reaction to pass from the reaction zone through the spaces (14) between the distributor elements (12) into the material removal zone (22) and to rest on the support regions (26) of the support member (24), and moving at least parts of the support regions (26) of the support member (24) with respect to the spaces (14) thereby to effect discharge of the coarse particles from the support regions (26) into an area beneath the support member (24).

27. A method according to claim 26, characterised in that the support regions (26) of the support member (24) serve to retain the fluidised bed (32).

28. A method according to claim 27, characterised in that the support regions (26) of the support member (24) are moved to control the height of the fluidised bed (32) and to effect discharge of particles lying on the regions (26).

29. A method according to any one of claims 26 to 28, characterised in that the particles are periodically removed from the area beneath the support member (24).

## Revendications

1. Un appareillage à lit fluidisé comprend un corps destiné à contenir un lit fluidisé dans une de ses régions, un distributeur de milieu de fluidisation comprenant plusieurs éléments espacés munis de sorties pour la distribution du milieu, le distributeur étant situé à l'intérieur du corps de manière à délimiter une zone de réaction située au-dessus et une zone d'enlèvement de matière située au-dessous, appareillage caractérisé en ce qu'il comporte un élément de support (24) situé dans la zone (22) d'enlèvement de matière et comportant plusieurs régions (26) de support alignées en registre avec les espaces (14) situés entre les éléments (12) du distributeur (11) et disposées en relation d'espacement par rapport à eux, au moins de pièces ou parties des régions (26) de support des éléments (24) de support pouvant être déplacées par rapport aux espaces (14) ménagés entre les éléments (12) du distributeur (11).

2. Appareillage selon la revendication 1, caractérisé en ce que les éléments (12) du distributeur (11) sont des tubes diffuseurs.

3. Appareillage selon la revendication 1, caractérisé en ce que les tubes diffuseurs (12) comportent des tubes verticaux perforés (16) agencés en rangées.

4. Appareillage selon la revendication 2 et 3, caractérisé en ce que les tubes diffuseurs (12) ont des surfaces supérieures planes et les tubes verticaux (16) sont de même hauteur.

5. Appareillage selon les revendications 2 et 3, caractérisé en ce que les tubes diffuseurs (12) ont des surfaces supérieures planes et les tubes verticaux (16) ont une hauteur qui varie progressivement.

6. Appareillage selon la revendication 5, caractérisé en ce que les tubes verticaux (16) qui sont situés le long du centre de chaque tube diffuseur (12) sont plus élevés que ceux situés vers les bords longitudinaux de ces tubes diffuseurs.

7. Appareillage selon les revendications 2 et 3, caractérisé en ce que les tubes diffuseurs ont des surfaces supérieures convexes.

8. Appareillage selon la revendication 7, caractérisé en ce que les tubes verticaux (16) sont de même hauteur.

9. Appareillage selon la revendication 7, caractérisé en ce que les tubes verticaux (16) ont une hauteur qui varie progressivement.

10. Appareillage selon la revendication 9, caractérisé en ce que les tubes verticaux (16) situés le long du centre de chaque tube diffuseur (12) sont plus élevés que ceux situés vers les bords longitudinaux de chaque tube diffuseur.

11. Appareillage selon l'une quelconque des revendications précédentes, caractérisé en ce que l'élément de support (24) est une grille composée de plusieurs barreaux (26) constituant les régions de support.

12. Appareillage selon l'une quelconque des revendications précédentes, caractérisé en ce que les régions de support (26) de l'élément de support (24) peuvent être déplacées latéralement par rapport aux espaces (14) ménagés entre les éléments (12) du distributeur (11).

13. Appareillage selon l'une quelconque des revendications précédentes, caractérisé en ce que les régions de support (26) de l'élément de support (24) comprennent des parties (27) déplaçables par pivotement par rapport aux espaces (14) ménagés entre les éléments (12) du distributeur (11).

14. Appareillage selon les revendications 1 à 10, caractérisé en ce que les espaces (14) entre les éléments (12) du distributeur (11) sont reliés en ponts par des plaques (13, 15) perforées et fixes, fixées aux périphéries inférieures des éléments (12), et en ce que les régions de support (26) de l'élément de support (24) sont perforées (25).

15. Appareillage selon l'une quelconque des revendications précédentes 1 à 11, caractérisé en ce que les régions de support (26) de l'élément de support (24) peuvent être déplacées verticalement par rapport aux espaces (14) ménagés entre les éléments (12) du distributeur (11).

16. Appareillage selon l'une quelconque des revendications 1 à 11, caractérisé en ce que les régions de support (26) de l'élément de support (24) peuvent être déplacées longitudinalement par rapport aux espaces (14) ménagés entre les éléments (12) du distributeur (11).

17. Appareillage selon l'une quelconque des revendications 1 à 11 précédentes, caractérisé en ce que les régions de support (26) de l'élément de support (24) peuvent pivoter autour de leurs axes.

18. Appareillage selon l'une quelconque des revendications précédentes, caractérisé en ce que les régions de support (26) de l'élément de support (24) peuvent être déplacées à l'unisson.

19. Appareillage selon l'une quelconque des revendications 1 à 17 précédentes, caractérisé en ce que les régions de support (26) de l'élément de support (24) peuvent être déplacées indépendamment les unes des autres.

20. Appareillage selon l'une quelconque des revendications précédentes, caractérisé en ce que l'élément de support (24) est disposé au-dessous du distributeur (11) à une distance permettant en service de déplacer l'élément de support (24).

21. Appareillage selon la revendication 18, caractérisé en ce que l'élément de support (24) est disposé au-dessous du distributeur (11) à une distance équivalant approximativement à cinq diamètres de la plus grosse particule à rencontrer en service.

22. Appareillage selon l'une quelconque des revendications précédentes, caractérisé en ce qu'un dispositif destiné à enlever les particules de la base (4) du corps (2) est prévu dans la zone (22) d'enlèvement de matière située au-dessous de l'élément de support (24).

23. Appareillage selon la revendication 20, caractérisé en ce qu'une trémie à verrouillage est prévue pour recevoir des particules retirées de la base (4) du corps (2) par le dispositif.

24. Appareillage selon l'une quelconque des revendications précédentes, caractérisé en ce que la zone de réaction est une zone de combustion.

25. Appareillage selon l'une quelconque des revendications précédentes, caractérisé en ce que la zone de réaction est une zone de gazéification.

26. Procédé pour faire fonctionner l'appareillage à lit fluidisé tel que revendiqué dans les revendications précédentes, le procédé comprenant les étapes consistant à former un lit de matière particulaire au sein du corps de l'appareil, à faire passer à travers les éléments du distributeur (11) un milieu de fluidisation destiné à pénétrer dans le lit pour en fluidiser les particules, ce qui provoque la réalisation d'un traitement ou d'une réaction dans le lit, procédé caractérisé en ce qu'on laisse des particules grossières, présentes ou formées par suite du traitement ou de la réaction, passer de la zone de réaction à travers les espaces (14) ménagés entre les éléments (12) du distributeur pour parvenir dans la zone (22) d'enlèvement de matière et pour reposer sur les régions de support (26) de l'élément de support (24), et en ce qu'on déplace au moins des parties des régions de support (26) de l'élément de support (24), par rapport aux espaces (14), afin de réaliser une décharge des particules grossières des régions de support (26) dans une zone située au-dessous de l'élément de support (24).

27. Procédé selon la revendication 26, caractérisé en ce que les régions de support (26) de l'élément de support (24) servent à retenir le lit fluidisé (32).

28. Procédé selon la revendication 27, caractérisé en ce qu'on déplace les régions de support (26) de l'élément de support (24) pour régler la hauteur du lit fluidisé (32) et pour effectuer une décharge de particules reposant sur les régions (26).

29. Procédé selon l'une quelconque des revendications 26 à 28, caractérisé en ce qu'on retire périodiquement les particules de la zone située sous l'élément de support (24).

## Patentansprüche

1. Wirbelschichtvorrichtung mit einem Körper (2), der in seinem einen Bereich eine Wirbelschicht beinhaltet, mit einem Verteiler (11) für ein Wirbelschichtmedium mit einer Vielzahl von beabstandeten Elementen (12), die mit Ausgängen für das Medium versehen sind, wobei der Verteiler innerhalb des Körpers angeordnet ist, um hierüber eine Reaktionszone (20) und hierunter eine Materialentfernungszone (22) zu definieren, dadurch gekennzeichnet, daß, in der Materialentfernungszone (22) ein Trägerglied (24) angeordnet ist und eine Vielzahl von Trägerbereichen (26) aufweist, die den Zwischenräumen (14) zwischen den Elementen (12) des Verteilers (11) zugeordnet sind und hiervon beabstandet sind, wobei zumindest Teile der Trägerbereiche (26) der Trägerglieder (24) bezüglich der Zwischenräume (14) zwischen den Elementen (12) des Verteilers (11) bewegbar sind.

2. Vorrichtung nach Anspruch 1, dadurch gekennzeichnet, daß die Elemente (12) des Verteilers (11) Durchblasrohre sind.

3. Vorrichtung nach Anspruch 2, dadurch gekennzeichnet, daß die Durchblasrohre (12) mit in Reihen angeordneten perforierten Standrohren (16) versehen sind.

4. Vorrichtung nach Anspruch 2 und 3, dadurch gekennzeichnet, daß die Durchblasrohre (12) flache obere Oberflächen aufweisen und die Standrohre (16) von gleicher Höhe sind.

5. Vorrichtung nach den Ansprüchen 2 und 3, dadurch gekennzeichnet, daß die Durchblasrohre (12) flache obere Oberflächen aufweisen und die Standrohre (16) in ihrer Höhe abgestuft sind.

6. Vorrichtung nach Anspruch 5, dadurch gekennzeichnet, daß die entlang der Mitte eines jeden Durchblasrohres (12) angeordneten Standrohre (16) höher sind als diejenigen, die zu den in Längsrichtung angeordneten Randkanten desselben angeordnet sind.

7. Vorrichtung nach Ansprüchen 2 und 3, dadurch gekennzeichnet, daß die Durchblasrohre konvexe obere Oberflächen aufweisen.

8. Vorrichtung nach Anspruch 7, dadurch gekennzeichnet, daß die Standrohre (16) gleiche Höhe aufweisen.

9. Vorrichtung nach Anspruch 7, dadurch gekennzeichnet, daß die Standrohre (16) in ihrer Höhe abgestuft sind.

10. Vorrichtung nach Anspruch 9, dadurch gekennzeichnet, daß die entlang der Mitte eines jeden Durchblasrohres (12) angeordneten Standrohre (16) höher sind als diejenigen, die zu den Längskanten desselben hin angeordnet sind.

11. Vorrichtung nach einem der vorhergehenden Ansprüche, dadurch gekennzeichnet, daß das Trägerglied (24) ein Rost ist, dur aus einer Vielzahl von Stangen (26) besteht, welche die Trägerbereiche darstellen.

12. Vorrichtung nach einem der vorhergehenden Ansprüche, dadurch gekennzeichnet, daß die Trägerbereiche (26) des Trägergliedes (24) bezüglich der Zwischenräume zwischen den Elementen (12) des Verteilers (11) seitlich bewegbar sind.

13. Vorrichtung nach einem der vorhergehenden Ansprüche, dadurch gekennzeichnet, daß die Trägerbereiche (26) der Trägerglieder (24) Abschnitte (27) umfassen, welche bezüglich der Zwischenräume (14) zwischen den Elementen (12) des Verteilers (11) schwenkbar bewegbar sind.

14. Vorrichtung nach den Ansprüchen 1 bis 10, dadurch gekennzeichnet, daß die Zwischenräume (14) zwischen den Elementen (12) des Verteilers (11) mittels festen, mit Öffnungen versehenen Platten (13, 15) überbrückt sind, welche an den unteren Rändern der Elemente (12) befestigt sind, und daß die Trägerbereiche (26) der Trägerglieder (24) mit Öffnungen (25) versehen sind.

15. Vorrichtung nach einem der vorhergehenden Ansprüche 1 bis 11, dadurch gekennzeichnet, daß die Trägerbereiche (26) der Trägerglieder (24) bezüglich der Zwischenräume (14) zwischen den Elementen (12) des Verteilers (11) vertikal bewegbar sind.

16. Vorrichtung nach einem der vorhergehenden Ansprüche 1 bis 11, dadurch gekennzeichnet, daß die Trägerbereiche (26) der Trägerglieder (24) bezüglich der Zwischenräume (14) zwischen den Elementen (12) des Verteilers (11) in Längsrichtung bewegbar wind.

17. Vorrichtung nach einem der vorhergehenden Ansprüche 1 bis 11, dadurch gekennzeichnet, daß die Trägerbereiche (26) der Trägerglieder (24) um ihre Achsen schwenkbar sind.

18. Vorrichtung nach einem der vorhergehenden Ansprüche, dadurch gekennzeichnet, daß die Trägerbereiche (26) der Trägerglieder (24) gemeinsam bewegbar sind.

19. Vorrichtung nach einem der vorhergehenden Ansprüche 1 bis 17, dadurch gekennzeichnet, daß die Trägerbereiche (26) der Trägerglieder (24) unabhängig voneinander bewegbar sind.

20. Vorrichtung nach einem der vorhergehenden Ansprüche, dadurch gekennzeichnet, daß das Trägerglied (24) in einem solchen Abstand unterhalb des Verteilers (11) angeordnet ist, daß im Betrieb das Trägerglied (24) bewegbar ist.

21. Vorrichtung nach Anspruch 18, dadurch gekennzeichnet, daß das Trägerglied (24) unter einem Abstand unterhalb des Verteilers (11) angeordnet ist, welcher etwa fünf mal so groß ist wie der Teilchendurchmesser der größten, im Betrieb angetroffenen Teilchen.

22. Vorrichtung nach einem der vorhergehenden Ansprüche, dadurch gekennzeichnet, daß in der Materialentfernungszone (22) unterhalb des Trägergliedes (24) eine Vorrichtung zum Entfernen von Teilchen vom Boden (4) des Körpers (2) vorgesehen ist.

23. Vorrichtung nach Anspruch 20, dadurch gekennzeichnet, daß ein Schleusenbehälter vorgesehen ist, um mittels der Einrichtung vom Boden (4) des Körpers (12) entfernte Teilchen aufzunehmen.

24. Vorrichtung nach einem der vorhergehenden Ansprüche, dadurch gekennzeichnet, daß die Reaktionszone eine Verbrennungszone ist.

25. Vorrichtung nach einem der vorhergehenden Ansprüche, dadurch gekennzeichnet, daß die Reaktionszone eine Vergasungszone ist.

26. Verfahren zum Betreiben einer Wirbelschichtvorrichtung entsprechend der vorhergehenden Ansprüche, wobei das Verfahren die Schritte umfaßt, innerhalb des Körpers der Vorrichtung eine Schicht aus teilchenförmigem Material zu bilden, ein wirbelschichtbildendes Medium durch die Elemente des Verteilers (11) hindurchzuführen, welches in die Schicht gelangt, um deren Teilchen zu fluidisieren, und eine Behandlung oder eine Reaktion in der Schicht stattfinden zu lassen, dadurch gekennzeichnet, daß es groben Teilchen, die anwesend sind oder als Ergebnis der Behandlung oder Reaktion gebildet worden sind, ermöglicht wird, von der Reaktionszone durch die Zwischenräume (14) zwischen den Verteilerelementen (12) in die Materialentfernungszone (22) zu gelangen und sich auf den Trägerbereichen (26) des Trägergliedes (24) abzusetzen, und daß zumindest Teile der Trägerbereiche (26) des Trägergliedes (24) bezüglich der Zwischenräume (14) bewegt werden, wodurch ein Entladen der groben Teilchen von den Trägerbereichen (26) in einen Bereich unterhalb des Trägergliedes (24) bewirkt wird.

27. Verfahren nach Anspruch 26, dadurch gekennzeichnet, daß die Trägerbereiche (26) des Trägergliedes (24) dazu dienen, die Wirbelschicht (32) zurückzuhalten.

28. Verfahren nach Anspruch 27, dadurch gekennzeichnet, daß die Trägerbereiche (26) des Trägergliedes (24) bewegt werden, um die Höhe der Wirbelschicht (32) zu steuern und um das Entladen von auf den Bereichen (26) liegenden Teilchen zu bewirken.

29. Verfahren nach einem der Ansprüche 26 bis 28, dadurch gekennzeichnet, daß die Teilchen periodisch von dem Bereich unterhalb des Trägergliedes (24) entfernt werden.

FIG.I

FIG.2

FIG.3

FIG.4

FIG.5

FIG. 6

FIG.7

0 107 377